# EUROPEAN PATENT SPECIFICATION

(11) **EP 1 791 893 B1**
(45) Date of publication and mention of the grant of the patent: **04.11.2009**
(21) Application number: 05790835.2
(22) Date of filing: 22.09.2005
(51) Int. Cl.: C08G 79/04, C08L 85/02

(54) **AMINOPHOSPHINATE POLYMERS**
AMINOPHOSPHINATPOLYMERE
POLYMÈRES D'AMINOPHOSPHINATE

(30) Priority: 22.09.2004 GB 0420987
(43) Date of publication of application: 06.06.2007
(73) Proprietor: Rhodia UK Limited, Watford, Hertfordshire WD24 4QP (GB)
(72) Inventor: OTTER, Graham, Catshill, Bromsgrove B61 0PB (GB); ZAFAR, Shazia, Edgbaston, Birmingham B16 8SN (GB); WOODWARD, Gary, Northwich, Cheshire CW9 5QR (GB)
(74) Representative: Seugnet, Jean Louis
(86) International application number: PCT/GB2005/003658
(87) International publication number: WO 2006/032896

(56) References cited:
- EP-A- 0 419 264

## Description

The present invention relates to aminophosphinate mid functional co-polymers (also known as A-B-A type block polymers), methods of making these polymers and their applications.

Accordingly, in a first aspect, the present invention provides an aminophosphinate mid functional co-polymer, or oligomer thereof, of the formula:

(A)ₐ-[PO(OX)CR'₂NR(R''NR)ₘCR'₂-]ₙPO(OX)-(A)_{b} (I)

wherein:
X is hydrogen or any suitable cation;
each of the R groups, which may be the same or different, and each of the R' groups, which may be the same or different, is hydrogen, an optionally substituted alkyl, cycloalkyl, alkenyl, aryl, aralkyl, alkaryl or alkoxyalkyl group of 1-20 carbon atoms each of which may be optionally substituted once or more than once,
R" is an alkane group, substituted alkane group or heterocyclic group;
and wherein A is derived from any suitable monomer, a and b are the same and each is an integer from 1 to 1000 or a and b are different and one is zero or an integer from 1 to 1000 and the other is an integer from 1 to 1000,
m is zero or from 1 to 100,
and n is zero or from 1 to 100.

Preferably m is zero or from 1 to 10 and n is an integer from 1 to 50.

In the aminophosphinate block polymer all functional groups resident upon R, R' or R" should not irreversibly decompose in the presence of a carbonyl compound or hypophosphorous acid or inorganic acid.

In the context of the present invention the terms "polymer" or "polymeric" are to be interpreted as including oligomer and oligomeric.

The aminophosphinate mid functional co-polymers of this invention may have a molecular weight of as little as 300 or as high as 100,000 or more such as 500,000.

In preferred co-polymers of the present invention n is an integer from 1 to 20, more preferably 1 to 10, most preferably from 2 to 6.

In preferred co-polymers of the present invention a and b, which can be the same or different, are each integers from 1 to 20, preferably from 5 to 15, most preferably 10.

Where X is a cation, the cations are preferably alkali metal ions, preferably sodium or alternatively potassium or lithium, but may be other monovalent, divalent or trivalent cations such as ammonium and organic substituted ammonium, (including quaternary ammonium), such as triethyl- or triethanolammonium, quaternary phosphonium such as tetrakis hydroxymethyl phosphonium, alkaline earth such as calcium and magnesium or other metal ions such as aluminium.

Preferably the R groups represent hydrogen, substituted alkyl (e.g. ethyl or methyl), aryl (e.g. phenyl or tolyl) or heterocycles (e.g. thiazole or triazole groups), and especially at least one R group and preferably all R groups represent groups which carry one or more functional groups capable of coordinating to metal ions, such as carbonyl, carboxyl, amino, imino, amido, phosphonic acid, hydroxyl, sulphonic acid, arsenate, inorganic and organic esters thereof, e.g. sulphate or phosphate, and salts thereof. The aminophosphinate polymers of this invention may carry a number of different R groups, as is the case if more than one amine is added to the reaction mixture from which the block polymer is isolated.

The R' groups are preferably all hydrogen atoms. Alternatively the R' groups may independently be alkyl (e.g. methyl or ethyl), aryl (e.g. phenyl or tolyl), cycloalkyl, aralkyl (e.g benzyl), alkoxyalkyl (e.g. alkoxyhexyl) or these groups optionally substituted at least once or at least twice, such as substituted alkyl (e.g. haloalkyl, carboxyalkyl or phosphonoalkyl), substituted aryl (e.g. hydroxyphenyl or nitrophenyl).

Preferably the R" is substituted once or more than once with a carboxylic acid group, a sulphonic acid group, a phosphonic acid group or an amino group.

The preferred aminophosphinate mid functional co-polymers of this invention are those in which at least one of the R groups carries at least one carboxylic acid substituent, for example -C₆H₄COOH, but especially a carboxyalkyl group containing 2 to 12 carbon atoms e.g. -CH₂COOH (when the aminophosphinate block polymer is synthesised using glycine), -CH(COOH)CH₂COOH (when the aminophosphinate block polymer is synthesised using aspartic acid), -CH(COOH)CH₂CH₂COOH (when the aminophosphinate block polymer is synthesised using glutamic acid) or -CH₂CH₂OH (when the aminophosphinate block polymer is synthesised using ethanolamine).

The aminophosphinate mid functional co-polymers of this invention may be optically active e.g. as in the case of examples in which at least one of the R, R' or R" groups is chiral or when the two R' groups on one or more of the carbon atoms in formula (I) are non-identical. The arrangements of the substituents around each chiral centre may be of either configuration. If desired racemic mixtures may be separated into optical isomers by means known per se.

The groups A may be derived from any suitable monomer. The monomer may be hydrophilic or hydrophobic.

The monomer may be any ethylenically unsaturated compound in which the ethylenic bond is chemically activated by at least one adjacent group such as a sulphonate, phosphonate or carboxylate group. Examples include acrylic acid, fumaric acid, maleic acid, vinylsulphonic acid, vinylidene diphosphonic acid, methacrylic acid, itaconic acid, aconitic acid, mesaconic acid, citraconic acid, crotonic acid, isocrotonic acid, angelic acid, tiglic acid, vinyl alcohol, vinyl chloride, vinyl phosphonic acid, styrene sulphonic acid, styrene-p-sulphonic acid, 2-acrylamido-2-methyl propane sulphonic acid, and derivatives thereof, and the water soluble salts of the aforesaid acids.

The monomer may alternatively be ethyl/methyl/butyl acrylate or methacrylate, vinyl acetate, styrene, vinyl versatate, vinyl sterate, a vinyl silane, a vinyl siloxane, an N-vinyl pyrrolidone, acrylamide and derivatives thereof, hydroxyl ethyl acrylate/methacrylate, acrylate esters, tertiary-butyl acrylate, 2-ethyl-hexyl acrylate or octadecyl acrylate and derivatives thereof.
In a number of most preferred embodiments:
a. X, R and R' are hydrogen, R" is (CH₂)₂ or (CH₂)₈ or (CH₂)₁₂ , m is 1 and A is derived from acrylic acid.
b. X, R and R' are hydrogen, R" is (CH₂)₄CHCOOH and m is 1 and A is derived from acrylic acid.
c. X, R and R' are hydrogen, R" is CHCH₃CH₂(OCH₂CHCH₃)_{2.6} and m is 1 and A is derived from acrylic acid.

EP 0 419 264 A relates to an aminophosphinate polymer, a method of making this polymer and its applications. Although the aminophosphinate polymer is similar to the polymer of formula (I) the present application it contains no segment (A) derived from an ethylenically unsaturated monomer.

The present invention further comprises a method of preparing an aminophosphinate mid functional co-polymer, and oligomers thereof, comprising the steps of:
(a) preparing an aminophosphinate polymer of the formula (II);
   (II) H-[PO(OX)CR'₂NR(R"NR)ₘCR'₂-]ₙPO(OX)H
   where R, R', R", X, m and n have the same meaning as in the first aspect above; and
(b) subsequently adding an appropriate monomeric group.

The aminophosphinate polymers of step (a) may be in the form of free acids or in the form of at least partly neutralised salts thereof. The cations are preferably alkali metal ions, preferably sodium or alternatively potassium or lithium, but may be other monovalent, divalent or trivalent cations such as ammonium and organic substituted ammonium, (including quaternary ammonium), such as triethyl- or triethanolammonium, quaternary phosphonium such as tetrakis hydroxymethyl phosphonium, alkaline earth such as calcium and magnesium or other metal ions such as aluminium. Preferably the salts or partial salts are water soluble e.g. with a solubility in water at 20 °C of at least 10g/l especially at least 100g/l.

The aminophosphinate polymer of step (a) of this invention may be formed by allowing hypophosphorous acid to react with an amine in the presence of a carbonyl compound, which is either a ketone or an aldehyde

or a mixture thereof, and an inorganic acid. The molar ration of hypophosphorous acid:amine is preferably from 4:1 to 1:1, most preferably 2:1. The hypophosphorous acid may be added to the reaction as the acid or as a salt thereof e.g. sodium hypophosphite. The reaction is accompanied by the evolution of water.

The aminophosphinate polymer of step (a) of this invention may be synthesised by the reaction of one or more than one primary amine, RNH₂ such as glycine, aspartic acid, glutamic acid, 4-amino butyric acid, 6-amino caproic acid, lysine, 1-amino sorbitol or taurine, or one or more than one secondary amine, RR'NH or R (NHR'')ₙNHR such as N,N' dimethyl ethylenediamine or N,N' dimethylethylene triamine or a mixture of at least two of the aforesaid amines, such that an aminophosphinate is formed in which not every unit is identical, but each has the same general formula (I). Aminophosphinate polymers of varying molecular weights may be synthesised from a mixture of a primary amine and a secondary amine. The amine from which the aminophosphinate polymer of step (a) may be synthesised is preferably a diamine, for example ethylene diamine, 1, 8-diaminooctane or 1, 12-diaminododecane.

The aminophosphinate polymers of step (a) of this invention may be synthesised from one or more than one carbonyl compound.

The aminophosphinate polymers of step (a) of this invention may be synthesised in any liquid phase in which the reactants and preferably the products are at least sparingly soluble, but preferably the reaction is performed in acidic aqueous solution at 40-120 °C within a pH range of 0-2 e.g. 0.5-1.5. The amount of the carbonyl compound is normally 1-4 times the amount of the hypophosphorous acid; preferably the carbonyl compound is added slowly to a mixture of the other ingredients. The reaction is normally terminated after 0.5-5 hours. The product may be isolated by filtration to give the free polymeric phosphinic acid, or treated with base to form a solution of the polymeric aminophosphinate. The solution may be stripped of water to yield a solid salt of the polymeric phosphinate.

Alternatively the reaction mixture may be concentrated by evaporation or diluted by the addition of more liquid; the product may then be used as such or at least partly neutralised with a base e.g. sodium hydroxide, or alternatively the reaction product may be heated with a base before use. If desired the reaction products may be separated into pure components for example by column chromatography e.g. by ion exchange column chromatography.

In step (b) the monomeric groups can be added at any pH. In one embodiment the monomeric groups are added at a pH of 3-5, most preferably at a pH of 4.

Step (b) can take place in the presence of any suitable aqueous or organic solvent, preferably the solvent is aqueous when the monomeric group is hydrophilic and the solvent is organic when the monomeric group is hydrophobic. The most preferred aqueous solvent is water. The organic solvent may be toluene, xylene or ethyl acetate.

In step (b) the reaction can take place in the presence of any suitable initiator. The initiator is preferably a free radical source. The free radical source may be a peroxy salt such as an alkali metal (e.g. sodium) persulphate or peracetate, hydrogen peroxide, a hydroperoxide, chlorine dioxide, sodium chlorate, sodium hypochlorite, organotin hydrides, azo compounds such as 4,4'-azobiscyanovaleric acid or azo-bis-isobutyronitrile, electrolysis, ultra violet or other ionising radiation or ultrasound, or any combination of the foregoing.

Preferably the reaction components are present in the solvent in an amount of from 15 to 60 % weight by weight where the solvent is aqueous and 40 to 60% weight by weight where the solvent is organic.

Before step (b), in an intermediate step (a1), the aminophosphinate polymer of step (a) is preferably dissolved in a suitable solvent. The solvent may be an aqueous solvent, most preferably water, or alternatively an organic solvent, such as toluene, xylene or ethyl acetate. In one embodiment the solvent is water and the pH of the solution is adjusted to pH 2-6, preferably 3-5, most preferably 4. The pH is preferably adjusted by the addition of a base, for example sodium hydroxide.

Before step (b), in an intermediate step (a2), the monomeric group is preferably dissolved in a suitable solvent. The solvent may be an aqueous solvent, most preferably water, or alternatively an organic solvent, such as toluene, xylene or ethyl acetate. In one embodiment the solvent is water and the pH of the solution is preferably adjusted to pH 2-6, preferably 3-5, most preferably 4. The pH is preferably adjusted by the addition of a base, for example sodium hydroxide.

Preferably, in step (b) part of the solution of aminophosphinate polymer of step (a1) is mixed with part of the solution of the monomeric group of step (a2) and this mixture is added to the remainder of the solution of the aminophosphinate polymer of step (a1). Subsequently the remainder of the solution of the monomeric group of step (a2) is added. The additions of the mixture of part the solution of aminophosphinate polymer and part of the solution of monomeric group, and the addition of the remainder of the solution of monomeric group, to the part of the polymer solution preferably take place in the presence of a suitable initiator, such as sodium persulphate. The aforementioned additions also preferably take place under reflux conditions.

The reaction may be carried out batchwise, semi-continuously or continuously, e.g. in a pipe reactor. The initiator may be added initially or, preferably, in a plurality of additions, or continuously or semi-continuously throughout the reaction. To maximise the yield of phosphonated product it is sometimes necessary to add the monomeric group, continuously or intermittently, during the reaction period to an aqueous solution of the phosphinate.

They are useful, particularly as scale and corrosion inhibitors, in cooling water treatment, treatment of industrial process water, boiler water treatment, treatment of water in central heating and air conditioning systems, desalination plant and for treating water used or produced in oil wells including injection water, produced water, and water used for hydrostatic testing of pipelines, particularly for prevention of the deposit of calcium carbonate scale.

In particular, the compounds and mixtures of the invention may be used in squeeze treatment of oil wells. They are especially effective in preventing barium sulphate scale. For example in oil wells the hole is typically flushed out with aqueous surfactant to provide a water wettable surface and then impregnated with a solution of the polymer of the present invention. The calcium salt may be formed in situ either by calcium in the formation, where the latter comprises limestone, or by prior, or subsequent, treatment of the hole with an aqueous calcium salt, e.g. where the formation comprises sandstone.

Effective concentrations may typically range from 0.1 to 200ppm, preferably 0.5 to 100ppm depending on the nature of the aqueous system.

For relatively soft water 1 to 50ppm, e.g. 1.5 to 20ppm, most preferably 2 to 10ppm, may give useful corrosion protection. However for oil field scale prevention where barium sulphate is a problem concentrations in the range 5 to 50, especially 8 to 25, e.g. 10 to 20ppm, are preferred.

Other applications for which the co-polymers can be used are SMUT inhibitors, additives to oral hygiene preparations and dentifrices, setting retarders for cement or plaster, desalination scale inhibitors, treatment of desalination plant and for treating water used or produced in oil wells including injection water, produced water and water used for hydrostatic testing of pipelines, deflocculation, adhesion, pre-treatment, dispersant, sequestrants, chelating agents, foam controlling agents, corrosion inhibitor, builders, surfactants and sealants in the anodising of aluminium.

The co-polymers of the present invention also find application as deflocculants or dispersants for particulate inorganic substances (such as clays and calcium carbonate) and for other pigments, for cement and for soils in detergency, more particularly in detergency of fabric, for example in solid or liquid laundry products or softeners.

The co-polymers of the present invention may be cross-linked via the amino group by the use of a conventional cross-linking agent, e.g. a diepoxide.

The co-polymers of the present invention are also effective as corrosion inhibitors for ferrous and non-ferrous metals (e. g. aluminium or galvanised steel) and as a surface treatment for aluminium in the preparation of lithographic plates.

The co-polymers of the present invention can also be used in corrosion inhibiting pigments. The corrosion inhibiting pigment may be a solid composition and may be prepared by reacting a concentrated aqueous solution of any of the aminophosphinate co-polymers according to the invention with a base or salt of calcium, zinc, barium, aluminium or other polyvalent metal and precipitating a solid salt.

The corrosion inhibiting pigment may be dissolved or dispersed in an anti-corrosive paint, varnish, enamel, lacquer, or other coating formulation. The formulation may comprise a volatile liquid vehicle, such as water or a volatile organic solvent including petroleum spirit, turpentine, ketones, esters and/or aromatic hydrocarbon solvent, and/or a drying oil, such as linseed oil, soya oil, tung oil or dehydrated castor oil, which may optionally be dissolved in said volatile organic solvent or emulsified in said water.

The formulation typically may also comprise a resin, e.g. a polyester, urea formaldehyde, melamine, acrylic, alkyd, polyurethane, vinyl chloride, vinyl acetate, phenolic or epoxy resin dissolved or dispersed therein and/or a dispersed pigment. We prefer that the pigment should be or should comprise other corrosion inhibiting pigments such as red lead, potassium zinc chromate, metallic zinc or aluminium powder or zinc oxide and/or that the formulation should contain one or more of the other corrosion inhibitors referred to above in addition to the corrosion inhibiting pigment of the invention.

The coating compositions may additionally contain any of the conventional paint ingredients, including pigments such as titanium oxide, iron oxide, carbon black, phthalocyanine pigments or aluminium stearate, chlorinated rubber, polystyrene, silicone, asphalt, wetting agents, dispersants, emulsifiers, biocides, flocculants, marine antifoulants, antifoams, viscosifiers, fire retardants, fluorescers, aerosol propellants, talc, clay and/or plasticisers.

Alternatively the aminophosphinate mid functional co-polymers of the invention may be used to provide a corrosion inhibiting treatment for metal surfaces such as steel, aluminium and aluminium alloys after any machining and prior to storage, coating, electroplating, polishing or etching. Typically the work is coated with an aqueous solution containing at least an operative amount of said corrosion inhibitor, e.g. 10 to 500ppm, preferably 25 to 300, e.g. 20 to 200 especially 25 to 100, more especially 30 to 80.

After contacting with the corrosion inhibiting solution the work may be rinsed and/or subjected to one or more coating or finishing operations such as resin coating, lacquering, enamelling, painting, electrophoretic coating, spattering, vapour deposition, electrodeposition, etching, chemical or electrical polishing or may be put aside for storage.

The work may be greased for storage, but an advantage of the treatment is that greasing and hence subsequent degreasing may be avoided.

The co-polymer of the present invention may be incorporated into solid or liquid detergent compositions, more particularly in detergent compositions for fabrics, for example in solid or liquid laundry products or softeners. It functions as a stain remover and also may help to stabilise any bleach present and exhibits valuable detergent building action by sequestering calcium. Typically it is added to detergent compositions in amounts of from 0.5 to 20% by weight of the composition.

The liquid detergent of our invention preferably contains 5 to 50%, e.g. 10 to 40% by weight surfactant, 5 to 60%, e.g. 10 to 40% builder, 20 to 75%, e.g. 40 to 70% by weight water and 0.1 to 2.5% of the co-polymer. The liquid detergent preferably also contains conventional amounts of minor adjuncts including enzymes, soil suspenders such as sodium carboxymethyl cellulose, optical brighteners, dyes, perfumes, preservatives and foam modifiers.

The builder preferably comprises non-phosphate builders such as zeolite, carbonate, citrate, nitrilotriacetate and ethylene diamine tetracetate.

The detergent formulations of the invention may contain from 1% to 90% by weight of surfactant, more usually 2% to 70%, e.g. 3% to 60% especially 4% to 50%, preferably 5% to 40%, more preferably 6% to 30%, most preferably 7% to 20%.

The co-polymers of the present invention are effective for the inhibition of scale caused by metal carbonates and basic carbonates (particularly those of metals of Group IIA of the Periodic Classification), as well as scale caused by carboxylates, fluorides, hydroxides, phosphates, phosphonates, silicates and sulphates.

They may be used in aqueous based functional fluids such as hydraulic fluids, lubricants, cutting fluids and oilfield drilling muds.

The aminophosphinate mid functional co-polymers of this invention may be used in solid or liquid detergent compositions for wet or dry cleaning. These compositions, can contain ionic, cationic, amphoteric, semipolar and/or non-ionic surfactants, with or without an additional builder or co builder such as a zeolite, sodium tripoly phosphate, potassium pyrophosphate, sodium citrate, sodium nitrilotriacetate or sodium carbonate and optionally at least one of bleaching agents e.g. perborate, antiredeposition agents, buffers, dyes, perfumes, optical brightening agents, fillers and other detergent adjuvents. Such detergent compositions can have one or more surfactants usually in a total amount of 3-50%, such as an ionic surfactant 0-50% typically, 5 to 30% e.g. 10-20%, a nonionic surfactant 0-50% e.g. 3-20%, a soap 0-50% e.g. 1-30%, typically 2 to 3% an enzyme 0-5% e.g. 0.1-2%, a bleaching agent 0-35% e.g. 2-10%, a builder 0-50% e.g. 15-35% especially 10-30%, sodium silicate 0-10% e.g. 4-10%, an antiredeposition agent such as sodium carboxy methyl cellulose 0-5% e.g. 0.5-5%, an organic solvent e.g. ethanol usually in a proportion of 0-30% e.g. 2 to 10%, one or more sequestrants such as a phosphate 0-10% e.g. 0.2-5%, a peroxide activator e.g. tetraacetyl ethylene diamine 0-5% e.g. 0.1-4%, a buffer e.g. borax or an organic base usually in amounts of 0-10% e.g. 2-8%, an optical brightener 0-5% e.g. 0-4%, a perfume 0-5% e.g. 0-2%, water 0-80%, and a phosphinate according to this invention usually in an amount of 0.1-60% e.g. 0.5-50% preferably 1 to 40% more preferably 2 to 30% most preferably 3 to 20%. Liquid detergents according to our invention typically contain 20 to 75% by wt. more usually 30 to 60% of water. Solid detergents usually contain 10 to 75% by wt., more usually 30 to 60% e.g. 40 to 50% of a filler such as sodium sulphate.

Additionally the co-polymers of this invention can be used as peroxide stabilizers e.g. in pulp bleaching, typically as a 0.01-5% solution, as corrosion and scale, especially calcium silicate scale, inhibitors, in a concentration of 0.1-50 ppm in water systems such as boiler water or cooling water, as a water softener in amounts in molar excess over the dissolved metal ions and as deflocculating agents in solutions of concentration 0.01-5%.

The aminophosphinate mid functional co-polymers of this invention may be in the form of mixtures with at least one of hydrochloric, sulphuric, phosphorous or phosphoric acids, or salts thereof, especially with hydrochloric acid e.g. in amount of 0.1 - 10g/l hydrochloric acid but preferably 0.1-1g/l. Also they may be used as a mixture with each other, or with their precursors such as formaldehyde, amines, ketones, and aldehydes, or with by-products such as (HOCH₂)₂P(O)OH or N-methylated amines such as RR'NCH₃, CH₃NR(R''NR)ₙCH₃ or oligomers or polymers with a repeating unit of the block amino phosphinate polymer of the present invention and one or more terminal units - PO(OH)CR'₂NR(R''NR)ₙCH₃.

The present invention will now be further described by means of a number of examples, and associated figures, that are not intended to be limiting on the scope of protection. The products of each of examples 1 to 10 are shown in the table following example 10.
**Figure 1** is a bar chart showing the results of an evaporation test on a selection of amine polymers (Example 11);
**Figure 2** is a bar chart showing the results of a dispersion test on a selection of amine polymers (Example 12);
**Figure 3a** is a graph showing the results of a scale inhibition evaluation on a commercial scale inhibitor, PPCA;
**Figure 3b** is a graph showing the results of a scale inhibition evaluation on a polymer of the present invention (Example 13);
**Figure 4** is a bar chart showing the effect of the polymers of the present invention on the dry adhesion of aluminium (Example 15);
**Figure 5** is a bar chart showing the results of an adhesion reverse impact test of the polymers of the present invention on aluminium (Example 17);
**Figure 6** is a bar chart showing the results of an adhesion cupping impact test of the polymers of the present invention on aluminium (Example 18); and
**Figure 7** is a bar chart showing the results of an adhesion boil test of the polymers of the present invention on aluminium (Example 19).

### Example 1

An aqueous solution of poly(propylene glycol) bis (2-amino-propyl ether) (115g in 476ml of water) was mixed with hypophosphorous acid (132g of a 50% by weight aqueous solution) and hydrochloric acid (101.4g of a 36% by weight aqueous solution) to give a solution of pH 1. This solution was then heated to reflux and formaldehyde (80g of a 37.5% by weight aqueous solution) was added dropwise over a period of 30 minutes. The reaction mixture was refluxed in total for a period of 60 minutes. The resulting mixture was then allowed to cool to room temperature and then adjusted to pH 14 for analysis only, by the addition of sodium hydroxide (2g of 47% by weight aqueous solution to 2g of the reaction mixture). The reaction yield was 904g. Gel permeation chromatography gave a molecular weight of 421 with a polydispersity of 1.8. The product was characterized by ³¹P NMR, the spectrum showed an oligomeric product with 60% phosphinic acid groups which could be further polymerised.

### Example 2

An aqueous solution of 1,12-diaminododecane (204g in 624ml of water) was mixed with hypophosphorous acid (264g of a 50% by weight aqueous solution) and hydrochloric acid (203g of a 36% by weight aqueous solution) to give a solution of pH 1. This solution was then heated to reflux and formaldehyde (160g of a 37.5% by weight aqueous solution) was added dropwise over a period of 30 minutes. The reaction mixture was refluxed in total for a period of 60 minutes. The resulting mixture was then allowed to cool to room temperature and then adjusted to pH 14 for analysis only, by the addition of sodium hydroxide (2g of 47% by weight aqueous solution to 2g of the reaction mixture). The reaction yield was 1455g. Gel permeation chromatography gave a molecular weight of 325 with a polydispersity of 1.2. The product was characterized by ³¹P NMR, the spectrum showed an oligomeric product with 60% phosphinic acid groups which could be further polymerised.

### Example 3

An aqueous solution of 1,8-diaminooctane (147g in 330ml of water) was mixed with hypophosphorous acid (264g of a 50% by weight aqueous solution) and hydrochloric acid (203g of a 36% by weight aqueous solution) to give a solution of pH 1. This solution was then heated to reflux and formaldehyde (160g of a 37.5% by weight aqueous solution) was added dropwise over a period of 30 minutes. The reaction mixture was refluxed in total for a period of 60 minutes. The resulting mixture was then allowed to cool to room temperature and then adjusted to pH 14 for analysis only, by the addition of sodium hydroxide (2g of 47% by weight aqueous solution to 2g of the reaction mixture). The reaction yield was 1104g. Gel permeation chromatography gave molecular weight of 380 with a polydispersity of 1.9. The product was characterized by ³¹P NMR, the spectrum showed an oligomeric product with 74% phosphinic acid groups which could be further polymerised.

### Example 4

An aqueous solution of ethylene diamine (60g in 330ml of water) was mixed with hypophosphorous acid (264g of a 50% by weight aqueous solution) and hydrochloric acid (202g of a 36% by weight aqueous solution) to give a solution of pH 1. This solution was then heated to reflux and formaldehyde (160g of a 37.5% by weight aqueous solution) was added dropwise over a period of 30 minutes. The reaction mixture was refluxed in total for a period of 60 minutes. The resulting mixture was then allowed to cool to room temperature and then adjusted to pH 14 for analysis only, by the addition of sodium hydroxide (2g of 47% by weight aqueous solution to 2g of the reaction mixture). The reaction yield was 1016g. Gel permeation chromatography gave molecular weight of 373 with a polydispersity of 2.0. The product was characterized by ³¹P NMR, the spectrum showed an oligomeric product with 64% phosphinic acid groups which could be further polymerised.

### Example 5

An aqueous solution of L-lysine HCl salt (182.6g in 274ml of water) was mixed with hypophosphorous acid (264g of a 50% by weight aqueous solution) and hydrochloric acid (202g of a 36% by weight aqueous solution) to give a solution of pH 1. This solution was then heated to reflux and formaldehyde (320g of a 37.5% by weight aqueous solution) was added dropwise over a period of 30 minutes. The reaction mixture was refluxed in total for a period of 60 minutes. The resulting mixture was then allowed to cool to room temperature and then adjusted to pH 14 for analysis only, by the addition of sodium hydroxide (2g of 47% by weight aqueous solution to 2g of the reaction mixture). The reaction yield was 1243g. Gel permeation chromatography gave molecular weight of 1272 with a polydispersity of 3.3. The product was characterized by ³¹P NMR, the spectrum showed an oligomeric product with 56% phosphinic acid groups which could be further polymerised.

### Example 6

An aqueous solution of the product of Example 5 (100g in 118ml of water) was adjusted to pH 4 by the addition of sodium hydroxide (15g of 47% by weight aqueous solution) - Mixture A.

An aqueous solution of acrylic acid (172.8g in 691.2ml of water) was adjusted to pH 4 by the addition of sodium hydroxide (82g of 47% by weight aqueous solution) - Mixture B.

A 1L vessel was charged with half of Mixture A and heated to reflux. The remaining half of Mixture A was dissolved with half of Mixture B to give mixture C and added to the vessel over a period of 180 minutes. Simultaneously, an aqueous solution of sodium persulphate (17.2g in 229ml of water) was added dropwise over a period of 390 minutes. As mixture C was completed, the remaining half of Mixture B was added dropwise over a period 150 minutes. The reaction mixture was refluxed for a total of 450 minutes after which it was allowed to cool to room temperature. The product was characterized by gel permeation chromatography giving a molecular weight of 3147 and polydispersity of 5.7. The product was further characterized using ³¹P NMR giving a spectrum, which accorded with the suggested product.

### Example 7

An aqueous solution of the product of Example 4 (100g in 40ml of water) was adjusted to pH 4 by the addition of sodium hydroxide (15g of 47% by weight aqueous solution) - Mixture A.

An aqueous solution of acrylic acid (157.3g in 691.2ml of water) was adjusted to pH 4 by the addition of sodium hydroxide (74g of 47% by weight aqueous solution) - Mixture B.

A 1L vessel was charged with half of Mixture A and heated to reflux. The remaining half of Mixture A was dissolved with half of Mixture B to give mixture C and added to the vessel over a period of 180 minutes. Simultaneously, an aqueous solution of sodium persulphate (15.6g in 207ml of water) was added dropwise over a period of 390 minutes. As mixture C was completed, the remaining half of Mixture B was added dropwise over a period 150 minutes. The reaction mixture was refluxed for a total of 450 minutes after which it was allowed to cool to room temperature. The product was characterized by gel permeation chromatography giving a molecular weight of 5175 and polydispersity of 2.6. The product was further characterized using ³¹P NMR giving a spectrum, which accorded with the suggested product.

### Example 8

An aqueous solution of the product of Example 3 (80g in 43ml of water) was adjusted to pH 4 by the addition of sodium hydroxide (5g of 47% by weight aqueous solution) - Mixture A.

An aqueous solution of acrylic acid (84g in 336ml of water) was adjusted to pH 4 by the addition of sodium hydroxide (30g of 47% by weight aqueous solution) - Mixture B.

A 1L vessel was charged with half of Mixture A and heated to reflux. The remaining half of Mixture A was dissolved with half of Mixture B to give mixture C and added to the vessel over a period of 180 minutes. Simultaneously, an aqueous solution of sodium persulphate (8.3g in 111ml of water) was added dropwise over a period of 390 minutes. As mixture C was completed, the remaining half of Mixture B was added dropwise over a period 150 minutes. The reaction mixture was refluxed for a total of 450 minutes after which it was allowed to cool to room temperature. The product was characterized by gel permeation chromatography giving a molecular weight of 2473 and polydispersity of 2.9. The product was further characterized using ³¹P NMR giving a spectrum, which accorded with the suggested product.

### Example 9

An aqueous solution of the product of Example 2 (100g) was adjusted to pH 4 by the addition of sodium hydroxide (7.5g of 47% by weight aqueous solution) - Mixture A.

An aqueous solution of acrylic acid (50g in 200ml of water) was adjusted to pH 4 by the addition of sodium hydroxide (23.4g of 47% by weight aqueous solution) - Mixture B.

A 1L vessel was charged with half of Mixture A and heated to reflux. The remaining half of Mixture A was dissolved with half of Mixture B to give mixture C and added to the vessel over a period of 180 minutes. Simultaneously, an aqueous solution of sodium persulphate (4.9g in 66 ml of water) was added dropwise over a period of 390 minutes. As mixture C was completed, the remaining half of Mixture B was added dropwise over a period 150 minutes. The reaction mixture was refluxed for a total of 450 minutes after which it was allowed to cool to room temperature. The product was characterized by gel permeation chromatography giving a molecular weight of 2373 and polydispersity of 2.4. The product was further characterized using ³¹P NMR giving a spectrum, which accorded with the suggested product.

### Example 10

An aqueous solution of the product of Example 1 (100g in 38ml of water) was adjusted to pH 4 by the addition of sodium hydroxide (10g of 47% by weight aqueous solution) - Mixture A.

An aqueous solution of acrylic acid (89g in 355ml of water) was adjusted to pH 4 by the addition of sodium hydroxide (42g of 47% by weight aqueous solution) - Mixture B.

A 1L vessel was charged with half of Mixture A and heated to reflux. The remaining half of Mixture A was dissolved with half of Mixture B to give mixture C and added to the vessel over a period of 180 minutes. Simultaneously, an aqueous solution of sodium persulphate (8.8g in 117ml of water) was added dropwise over a period of 390 minutes. As mixture C was completed, the remaining half of Mixture B was added dropwise over a period 150 minutes. The reaction mixture was refluxed for a total of 450 minutes after which it was allowed to cool to room temperature. The product was characterized by gel permeation chromatography giving a molecular weight of 3047 and polydispersity of 2.9. The product was further characterized using ³¹P NMR giving a spectrum, which accorded with the suggested product.

**Table of structural formulae of products of examples 1 to 10**

| **Structure** | **Example** |
|---|---|
| 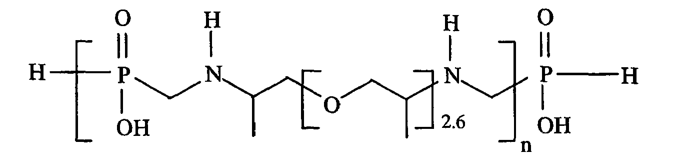 | Example 1 |
| 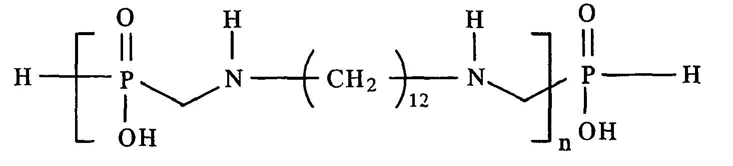 | Example 2 |
| 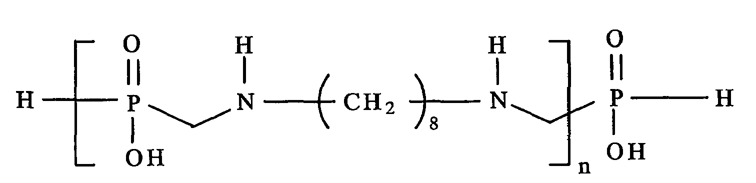 | Example 3 |
| 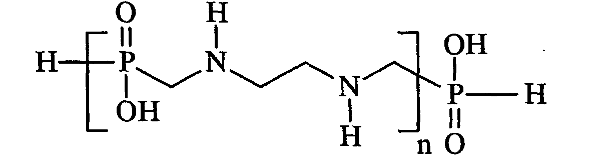 | Example 4 |
| 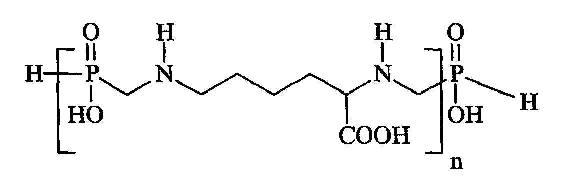 | Example 5 |
| 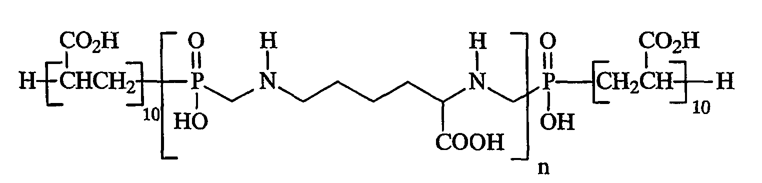 | Example 6 |
| 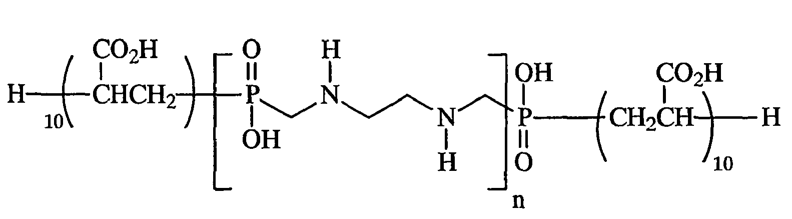 | Example 7 |
| 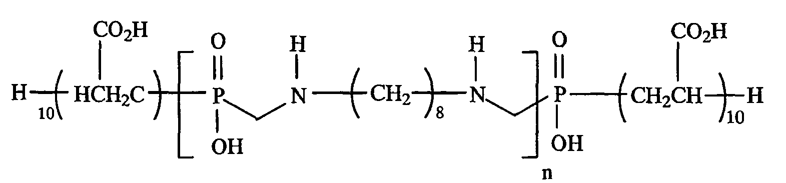 | Example 8 |
| 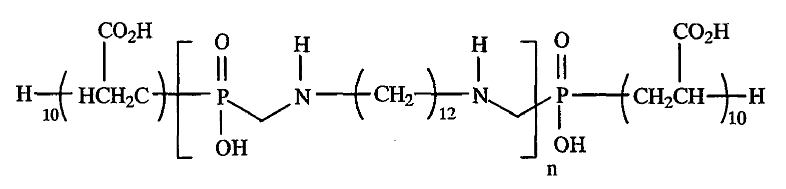 | Example 9 |
| 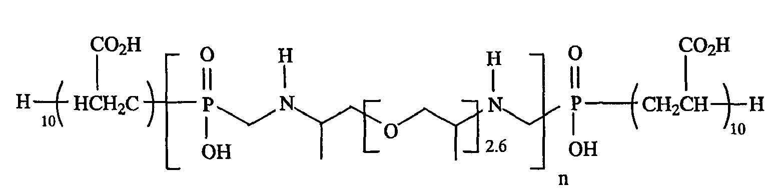 | Example 10 |

### Example 11

In a test to establish the calcium complexing ability of compounds according to this invention, a solution of the compound (1ppm) was prepared in CF2 SMOW (standard mean ocean water), which is the synthetic formulated seawater, formulation as below:

| ***SMOW Synthetic Seawater*** | |
|---|---|
| | **Composition g/L** |
| NaCl | 49.06 |
| MgCl₂ . 6H₂O | 22.21 |
| Na₂SO₄ | 8.18 |
| CaCl₂ . 2H₂O | 3.074 |
| KCl | 1.39 |
| KBr | 0.202 |
| NaHCO₃ | 0.1908 |

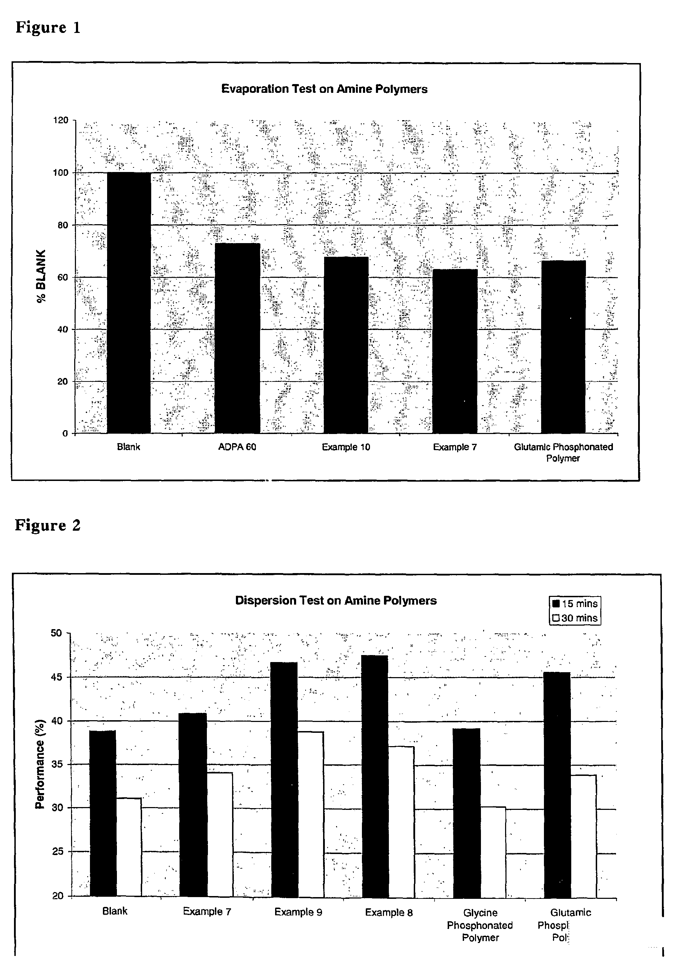

SMOW (250 ml) was adjusted to pH 7.8 by the addition of sodium hydroxide (1M) and put under test at 25°C until turbidity was first observed. The level of volume was allowed to fall a result of evaporation. The lower the volume at which control was maintained the more effective the inhibitor. The results are shown in Figure 1. By comparison to ADPA the aminophosphinate mid functional co-polymers of the present invention out performed a standard product.

### Example 12

In a test to establish the calcium dispersion performance of a compound, for desalination applications, tests were carried out using formulated (CF2 SMOW) water, inhibitor (in the form of a co-polymer of the present invention or a standard inhibitor) at 100-200ppm and CaCO₃ seed at 0.05%w/w. This solution was stirred for 10 minutes at constant speed and immediately transferred to a 1cm cell. The results were recorded over a period of 30 minutes on the UV/VIS spectrophotometer and are shown in Figure 2. The polymers of the present invention have generally shown better performance than the reference glycine and glutamic phosphonated polymers.

### Example 13

Compounds from this invention were further tested to evaluate the efficacy as scale inhibitors for oilfield application, a tube blocking test (BaSO₄) was performed. An effective scale inhibitor will prevent scale from forming.

The compound from example 6 was prepared as 100,000ppm solution in Miller water (typical formulated North Sea oilfield water) for which the formulation is below:

| **Component** | **Composition - g/ 5 Litres** | |
|---|---|---|
| | **Anions:** | **Cations:** |
| BaCl₂.2H₂O | | 5.785 |
| CaCl₂.2H₂O | | 17.415 |
| (CaCl₂.6H₂O) | | (25.95) |
| KCl | | 15.62 |
| MgCl₂.6H₂O | | 60.28 |
| SrCl₂.6H₂O | | 0.94 |
| NaCl | 215.87 | 215.87 |
| Na₂SO₄ | 21.965 | |
| NaHCO₃ | 0.965 | |
| Acetate Buffer - Molar NaAc adjusted to pH4.9 @25ºC with acetic acid. | 50 ml | 50 ml |

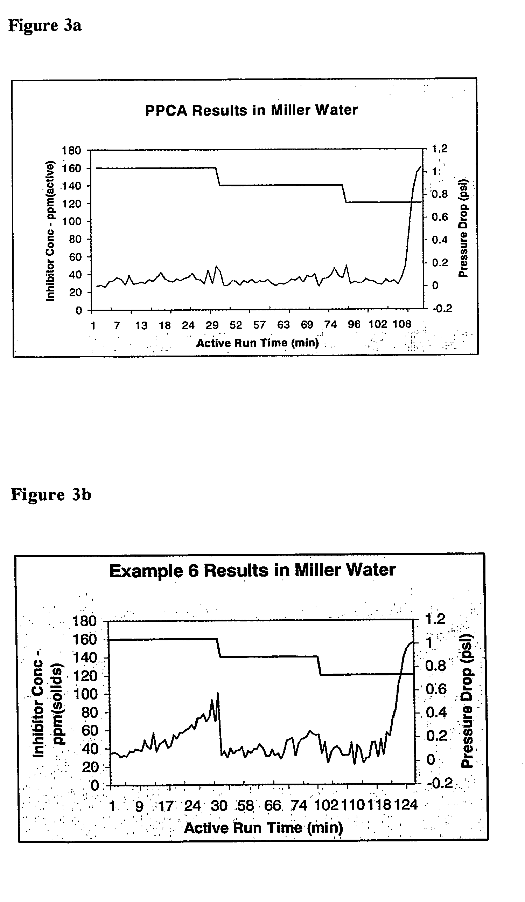

A commercial scale inhibitor PPCA (polyphosphino carboxylic acid) was used as a standard. The tube-blocking test showed that the PPCA standard had a minimum inhibitor concentration (MIC) of 120 ppm. The results are shown graphically in Figures 3a and 3b. The polymer of Example 6 had an MIC of 120 and performed as well as the standard.

### Example 14

Compounds from this invention were further tested to evaluate the efficacy in pre-treatment applications, tested for adhesion promotion on aluminium with further tests as corrosion inhibitors.

Aluminium panels (2" square) were prepared by cleaning with alkali, acid and water and drying. The compound was then applied to the panel dried at 250°C for 40 seconds before the primer was applied. The panels were cured at 330°C for 30 seconds and quenched in cold water before applying the topcoat. Details of the primer and topcoat are set out below:

### PRIMER

| | |
|---|---|
| Paint | Coroflex PP Blanc Polyester (ex PPG) |
| Application | 24mm bar coater |
| PMT | 232°C |
| Stoving temp | Oven set at 350°C; 48 seconds |
| DFT | 5-12mm |

The primer was applied by bar coater, stoved to a PMT of 232°C and quenched in cold water to prevent further crosslinking.

### TOPCOAT

| | |
|---|---|
| Paint | Durastar DG topcoat (ex PPG) |
| Application | 50mm bar coater |
| PMT | 241°C |
| Stoving temp | Oven set at 350°C; 50 seconds |
| DFT | 18-20mm |

The topcoat was applied by bar coater, stoved to a PMT of 241°C and quenched in cold water; the panels were dried immediately to prevent water staining.

The pre-treated and painted samples were evaluated by 5 different tests:
- Dry adhesion (Example 15).
- Bend test (Example 16).
- Reverse impact (Example 17).
- Erichsen-Draw test/ Cupping test (Example 18).
- Water boil test (Example 19).

### Example 15

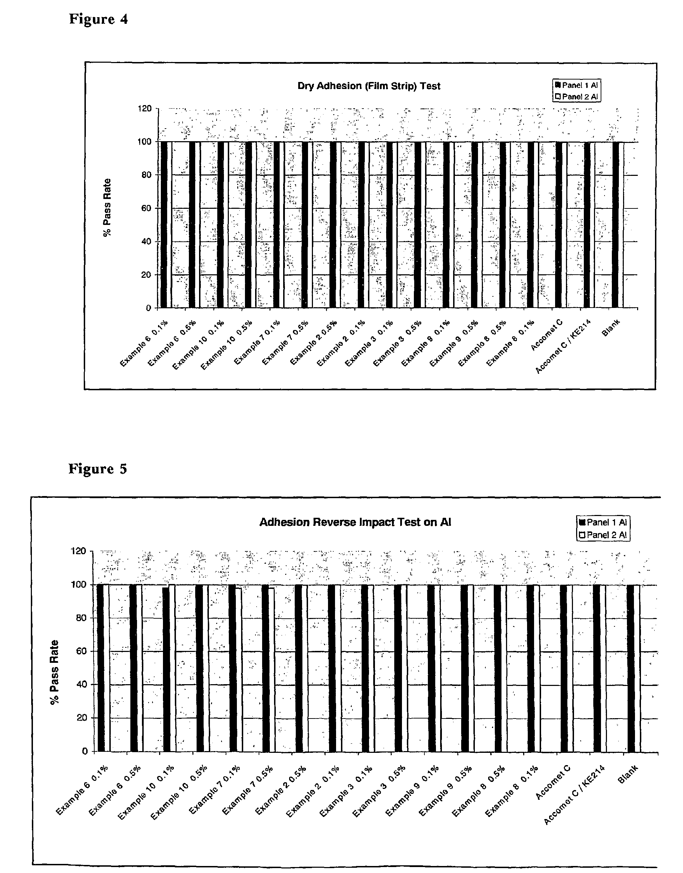

The pre-treated and painted aluminium panels were subjected to film peel (using an adhesive tape sold under the Trade Mark Sellotape). In the centre of the panel a 1cm² grid consisting of 10 x 10 lines were scribed through the paint to the metal. The adhesive tape firmly applied was removed sharply. The grid was inspected using 10x magnification with loss of paint noted. The results obtained are shown in Figure 4. In comparison to the standard the compounds of the present invention have performed well.

### Example 16

The pre-treated and painted aluminium panels were subjected to the T-bend test using a vice. Where 0T is defined as metal strip bent completely on itself with no crimping and without creating an excessive gap at the fold. The crease is visually inspected using 10x magnification. The T bend at which no cracks are observed is the pass point for the test. The following results were obtained:

| | | **Bend Test (T = no of turns)** | |
|---|---|---|---|
| **Candidate** | **Concentration** | **Panel 1** | **Panel 2** |
| Example 6 | 0.1 % | 3 | 3 |
| | 0.5 % | 3 | 3 |
| Example 10 | 0.1 % | 3 | 3 |
| | 0.5 % | 3 | 3 |
| Example 7 | 0.1 % | 3 | 3 |
| | 0.5 % | 3 | 3 |
| Example 2 | 0.1 % | 3 | 3 |
| | 0.5 % | 3 | 3 |
| Example 3 | 0.1 % | 3 | 3 |
| | 0.5 % | 3 | 3 |
| Example 9 | 0.1 % | 3 | 3 |
| | 0.5 % | 3 | 3 |
| Example 8 | 0.1 % | 3 | 3 |
| | 0.5 % | 3 | 3 |
| Accomet C | 1 + 4 | 3 | 3 |
| Accomet C / KE214 | 1 + 4 | 3 | 3 |
| Blank | | 3 | 3 |

The compounds of the present invention performed well.

### Example 17

The pre-treated and painted aluminium panels were subjected to reverse impact test. In the centre of the panel a 1cm² grid consisting of 5 x 5 lines were scribed through the paint to the metal. A 1kg weight was dropped from a height of 1m onto the reverse side of panel. Indentation was obtained of height 6mm for aluminium. The results obtained are shown in Figure 5. The pre-treated and painted aluminum panels all showed good resistance to reverse impact test compared to the standards.

### Example 18

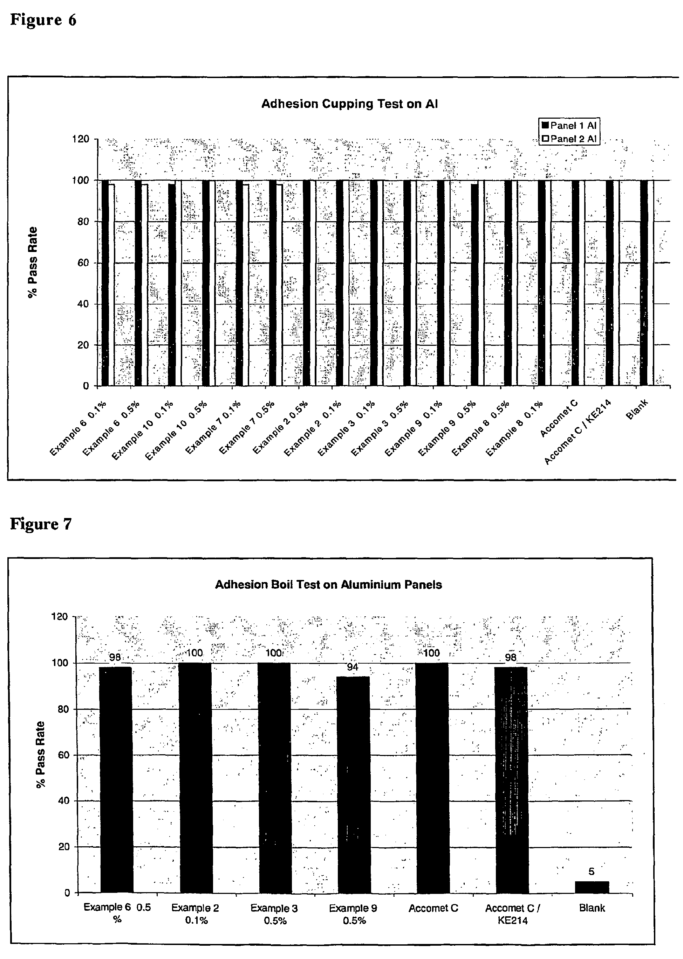

The pre-treated and painted aluminium panels were subjected to Erichsen-Draw test. This test also known as the cupping test, involving slow force to rupture surface of panel. A ball bearing was slowly pushed into reverse side of the panel at a constant depth of 5.8mm for aluminium. Adhesive tape sold under the Trade Mark Sellotape was applied firmly to the domed grid and removed sharply. Inspection was carried out using 10x magnification. The results obtained are shown in Figure 6. The copolymers of the present invention performed well in the test.

### Example 19

The pre-treated and painted aluminium panels were subjected to the boil test following the cupping test. The panels were placed into boiling water for 1hr, removed and allowed to stand for 1hr. Adhesive tape sold under the Trade Mark Sellotape was firmly applied to the domed grid and removed sharply. Inspection was carried out using 10x magnification. The results obtained are shown in Figure 7. In comparison to the standards, the co-polymers have performed well.

## Claims

1. An aminophosphinate mid functional co-polymer, or oligomer thereof, of the formula:
(A)ₐ-[PO(OX)CR'₂NR(R''NR)ₘCR'₂-]ₙPO(OX)-(A)_{b} (I)
wherein
X is hydrogen or any suitable cation;
each of the R groups, which may be the same or different, and each of the R' groups, which may be the same or different, is hydrogen, an optionally substituted alkyl, cycloalkyl, alkenyl, aryl, aralkyl, alkaryl or alkoxyalkyl group of 1-20 carbon atoms each of which may be optionally substituted once or more than once,
R" is an alkane group, substituted alkane group or heterocyclic group;
and wherein A is derived from any suitable monomer, a and b are the same and each is an integer from 1 to 1000 or a and b are different and one is zero or an integer from 1 to 1000 and the other is an integer from 1 to 1000,
m is zero or from 1 to 100,
and n is zero or from 1 to 100.

2. A co-polymer according to claim 1 wherein n is an integer from 1 to 20.

3. A co-polymer according to claim 2 wherein n is an integer from 2 to 6.

4. A co-polymer according to any preceding claim wherein a and b can be the same or different and are each integers from 1 to 20.

5. A co-polymer according to any preceding claim in which R" is substituted once or more than once with a carboxylic acid group, a sulphonic acid group, a phosphonic acid group or an amino group.

6. A co-polymer according to any preceding claim in which at least one of the R groups carries at least one carboxylic acid substituent.

7. A co-polymer according to any preceding claim wherein the monomer, A, is any ethylenically unsaturated compound in which the ethylenic bond is chemically activated by at least one adjacent group.

8. A co-polymer according to Claim 7 wherein the monomer is selected from acrylic acid, fumaric acid, maleic acid, vinylsulphonic acid, vinylidene diphosphonic acid, methacrylic acid, itaconic acid, aconitic acid, mesaconic acid, citraconic acid, crotonic acid, isocrotonic acid, angelic acid, tiglic acid, vinyl alcohol, vinyl chloride, vinyl phosphonic acid, styrene sulphonic acid, styrene-p-sulphonic acid, 2-acrylamido-2-methyl propane sulphonic acid, and derivatives thereof, and the water soluble salts of the aforesaid acids.

9. A co-polymer according to any of claims 1 to 6 wherein the monomer, A, is ethyl/methyl/butyl acrylate or methacrylate, vinyl acetate, styrene, vinyl versatate, vinyl sterate, a vinyl silane, a vinyl siloxane, an N-vinyl pyrrolidone, acrylamide and derivatives thereof, hydroxyl ethyl acrylate/methacrylate, acrylate esters, tertiary-butyl acrylate, 2-ethyl-hexyl acrylate or octadecyl acrylate and derivatives thereof.

10. A co-polymer according to claim 1 wherein X, R and R' are hydrogen, R" is selected from (CH₂)₂ or (CH₂)₈ or (CH₂)₁₂ , m is 1 and A is derived from acrylic acid.

11. A co-polymer according to claim 1 wherein X, R and R' are hydrogen, R" is (CH₂)₄CHCOOH and m is 1 and A is derived from acrylic acid.

12. A co-polymer according to claim 1 wherein X, R and R' are hydrogen, R" is CHCH₃CH₂(OCH₂CHCH₃)_{2.6} and m is 1 and A is derived from acrylic acid.

13. A method of preparing an aminophosphinate mid functional co-polymer, and oligomers thereof of formula (I) as defined in any of claims 1 to 12, comprising the steps of
(a) preparing an aminophosphinate polymer of the formula (II),
(II) H-[PO(OX)CR'₂NR(R''NR)ₘCR'₂-]ₙPO(OX)H
where R, R', R", X, m and n have the same meaning as in the first aspect above by allowing hypophosphorous acid to react with an amine in the presence of a carbonyl compound and an inorganic acid; and
(b) subsequently adding an appropriate monomeric group derived from group A of formula (I), that monomer group being an ethylenically unsaturated compound in which the chemically activated bond reacts with the polymer of formula (II) to give said groups A.

14. A method according to claim 14 wherein the molar ratio of hypophosphorous acid:amine is from 4:1 to 1:1.

15. A method according to any of claims 13 to 14 wherein the aminophosphinate polymer of step (a) is synthesised by the reaction of one or more than one primary amine, one or more than one secondary amine, one or more than one diamine, or a mixture of any of the aforementioned amines.

16. A method according to claim 15 wherein the amine is a diamine.

17. A method according to claim 16 wherein the diamine is selected from ethylene diamine, 1, 8-diaminooctane or 1, 12-diaminododecane.

18. A method according to any of claims 13 to 17 wherein the aminophosphinate polymers of step (a) are synthesised in any liquid phase in which the reactants are at least sparingly soluble.

19. A method according to claim 18 wherein the aminophosphinate polymers of step (a) are synthesised in acidic aqueous solution at 40-120°C within a pH range of 0-2.

20. Use of the aminophosphinate mid functional co-polymers of claims 1 to 12 or made by the method of claims 13 to 19 as scale and corrosion inhibitors in water systems to prevent calcium carbonate and barium sulphate scale.

21. Use of the aminophosphinate mid functional co-polymers of claims 1 to 12 or made by the method of claims 13 to 19 as SMUT inhibitors, additives to oral hygiene preparations and dentifrices, setting retarders for cement or plaster, desalination scale inhibitors, deflocculation, adhesion, pre-treatment, dispersant, sequestrants, chelating agents, foam controlling agents, corrosion inhibitor, builders, surfactants and sealants in the anodising of aluminium.

22. Use of the aminophosphinate mid functional co-polymers of claims 1 to 12 or made by the method of claims 13 to 19 as deflocculants or dispersants for particulate inorganic substances (such as clays and calcium carbonate) and for other pigments, for cement and for soils in detergency.

23. Use of the aminophosphinate mid functional co-polymers of claims 1 to 12 or made by the method of claims 13 to 19 in corrosion inhibiting pigments.

24. Use of the aminophosphinate mid functional co-polymers of claims 1 to 12 or made by the method of claims 13 to 19 to provide a corrosion inhibiting treatment for metal surfaces after any machining and prior to storage, coating, electroplating, polishing or etching.

25. Use of the aminophosphinate mid functional co-polymers of claims 1 to 12 or made by the method of claims 13 to 19 in solid or liquid detergent compositions.

## Patentansprüche

1. Mittelfunktionelles Aminophosphinat-Copolymer, oder Oligomer davon, der Formel:
(A)ₐ-[PO(OX)CR'₂NR(R''NR)ₘCR'₂-]ₙPO(OX)-(A)_{b} (I)
worin
X für Wasserstoff oder ein geeignetes Kation steht;
jede der Gruppen R, die gleich oder verschieden sein können, und jede der Gruppen R', die gleich oder verschieden sein können, für Wasserstoff oder eine gegebenenfalls substituierte Alkyl-, Cycloalkyl-, Alkenyl-, Aryl-, Aralkyl-, Alkaryl- oder Alkoxyarylgruppe mit 1-20 Kohlenstoffatomen, die jeweils gegebenenfalls einmal oder mehr als einmal substituiert sein können, steht,
R'' für eine Alkangruppe, substituierte Alkangruppe oder heterocyclische Gruppe steht;
A sich von einem beliebigen geeigneten Monomer ableitet, a und b gleich sind und jeweils für eine ganze Zahl von 1 bis 1000 stehen oder a und b verschieden sind und eine dieser Variablen für null oder eine ganze Zahl von 1 bis 1000 steht und die andere für eine ganze Zahl von 1 bis 1000 steht,
m für null oder 1 bis 100 steht
und n für null oder 1 bis 100 steht.

2. Copolymer nach Anspruch 1, worin n für eine ganze Zahl von 1 bis 20 steht.

3. Copolymer nach Anspruch 2, worin n für eine ganze Zahl von 2 bis 6 steht.

4. Copolymer nach einem der vorhergehenden Ansprüche, worin a und b gleich oder verschieden sein können und jeweils für ganze Zahlen von 1 bis 20 stehen.

5. Copolymer nach einem der vorhergehenden Ansprüche, worin R" einmal oder mehr als einmal mit einer Carbonsäuregruppe, einer Sulfonsäuregruppe, einer Phosphonsäuregruppe oder einer Aminogruppe substituiert ist.

6. Copolymer nach einem der vorhergehenden Ansprüche, worin mindestens eine der Gruppen R mindestens einen Carbonsäuresubstituenten trägt.

7. Copolymer nach einem der vorhergehenden Ansprüche, worin es sich bei dem Monomer A um eine ethylenisch ungesättigte Verbindung, in der die ethylenische Bindung durch mindestens eine benachbarte Gruppe chemisch aktiviert ist, handelt.

8. Copolymer nach Anspruch 7, worin das Monomer unter Acrylsäure, Fumarsäure, Maleinsäure, Vinylsulfonsäure, Vinylidendiphosphonsäure, Methacrylsäure, Itaconsäure, Aconitsäure, Mesaconsäure, Citraconsäure, Crotonsäure, Isocrotonsäure, Angelicasäure, Tiglinsäure, Vinylalkohol, Vinylchlorid, Vinylphosphonsäure, Styrolsulfonsäure, Styrol-p-sulfonsäure, 2-Acrylamido-2-methylpropansulfonsäure und Derivaten davon und den wasserlöslichen Salzen der obigen Säuren ausgewählt ist.

9. Copolymer nach einem der Ansprüche 1 bis 6, worin es sich bei dem Monomer A um Ethyl-/Methyl-/Butylacrylat oder -methacrylat, Vinylacetat, Styrol, Vinylversatat, Vinylstearat, ein Vinylsilan, ein Vinylsiloxan, ein N-Vinylpyrrolidon, Acrylamid und Derivate davon, Hydroxyethylacrylat/-methacrylat, Acrylatester, tert.-Butylacrylat, 2-Ethylhexylacrylat oder Octadecylacrylat und Derivate davon handelt.

10. Copolymer nach Anspruch 1, worin X, R und R' für Wasserstoff stehen, R" unter (CH₂)₂ oder (CH₂)₈ oder (CH₂)₁₂ ausgewählt ist, m für 1 steht und A sich von Acrylsäure ableitet.

11. Copolymer nach Anspruch 1, worin X, R und R' für Wasserstoff stehen, R" für (CH₂)₄CHCOOH steht, m für 1 steht und A sich von Acrylsäure ableitet.

12. Copolymer nach Anspruch 1, worin X, R und R' für Wasserstoff stehen, R" für CHCH₃CH₂(OCH₂CHCH₃)_{2,6} steht, m für 1 steht und A sich von Acrylsäure ableitet.

13. Verfahren zur Herstellung eines mittelfunktionellen Aminophosphinat-Copolymers und Oligomeren davon der Formel (I) gemäß einem der Ansprüche 1 bis 12, bei dem man:
(a) ein Aminophosphinat-Polymer der Formel (II)
(II) H-[PO(OX)CR'₂NR(R''NR)ₘCR'₂-]ₙPO(OX)H
worin R, R', R'', X, m und n die gleiche Bedeutung wie im ersten Aspekt oben besitzen, herstellt, indem man hypophosphorige Säure in Gegenwart einer Carbonylverbindung und einer anorganischen Säure mit einem Amin reagieren läßt; und
(b) danach eine geeignete monomere Gruppe, die sich von Gruppe A der Formel (I) ableitet, addiert, wobei es sich bei der Monomergruppe um eine ethylenisch ungesättigte Verbindung, in der die chemisch aktivierte Bindung mit dem Polymer der Formel (II) zu den Gruppen A reagiert, handelt.

14. Verfahren nach Anspruch 13, bei dem das Molverhältnis von hypophosphoriger Säure zu Amin 4:1 bis 1:1 beträgt.

15. Verfahren nach einem der Ansprüche 13 oder 14, bei dem man das Aminophosphinat-Polymer von Schritt (a) durch Umsetzung eines oder mehrerer primärer Amine, eines oder mehrerer sekundärer Amine, eines oder mehrerer Diamine oder einer Mischung beliebiger der obigen Amine synthetisiert.

16. Verfahren nach Anspruch 15, bei dem es sich bei dem Amin um ein Diamin handelt.

17. Verfahren nach Anspruch 16, bei dem man das Diamin unter Ethylendiamin, 1,8-Diaminooctan oder 1,12-Diaminododecan auswählt.

18. Verfahren nach einem der Ansprüche 13 bis 17, bei dem man die Aminophosphinat-Polymere von Schritt (a) in einer flüssigen Phase, in der die Reaktanten zumindest begrenzt löslich sind, synthetisiert.

19. Verfahren nach Anspruch 18, bei dem man die Aminophosphinat-Polymere von Schritt (a) in saurer wäßriger Lösung bei 40-120°C in einem pH-Bereich von 0-2 synthetisiert.

20. Verwendung der mittelfunktionellen Aminophosphinat-Copolymere gemäß den Ansprüchen 1 bis 12 oder der nach dem Verfahren gemäß den Ansprüchen 13 bis 19 hergestellten mittelfunktionellen Aminophosphinat-Copolymere als Scale- und Korrosionsinhibitoren in Wassersystemen zur Verhinderung von Calciumcarbonat- und Bariumsulfatablagerungen.

21. Verwendung der mittelfunktionellen Aminophosphinat-Copolymere gemäß den Ansprüchen 1 bis 12 oder der nach dem Verfahren gemäß den Ansprüchen 13 bis 19 hergestellten mittelfunktionellen Aminophosphinat-Copolymere als Schmandinhibitor, Additive für Mundpflegezubereitungen und Zahnpasten, Erstarrungsverzögerer für Zement oder Putz, Entsalzungs-Scaleinhibitoren, Entflockung, Haftung, Vorbehandlung, Dispergiermittel, Sequestriermittel, Chelatbildner, Schaumbekämpfungsmittel, Korrosionsinhibitor, Builder, Tenside und Verdichtungsmittel bei der Anodisierung von Aluminium.

22. Verwendung der mittelfunktionellen Aminophosphinat-Copolymere gemäß den Ansprüchen 1 bis 12 oder der nach dem Verfahren gemäß den Ansprüchen 13 bis 19 hergestellten mittelfunktionellen Aminophosphinat-Copolymere als Entflockungsmittel oder Dispergiermittel für teilchenförmige anorganische Substanzen (wie Tone und Calciumcarbonat) und für andere Pigmente, für Zement und für Schmutz beim Waschen und Reinigen.

23. Verwendung der mittelfunktionellen Aminophosphinat-Copolymere gemäß den Ansprüchen 1 bis 12 oder der nach dem Verfahren gemäß den Ansprüchen 13 bis 19 hergestellten mittelfunktionellen Aminophosphinat-Copolymere in korrosionsinhibierenden Pigmenten.

24. Verwendung der mittelfunktionellen Aminophosphinat-Copolymere gemäß den Ansprüchen 1 bis 12 oder der nach dem Verfahren gemäß den Ansprüchen 13 bis 19 hergestellten mittelfunktionellen Aminophosphinat-Copolymere zur Bereitstellung einer korrosionsinhibierenden Behandlung für Metalloberflächen nach maschineller Bearbeitung und vor der Lagerung, der Beschichtung, der Galvanisierung, dem Polieren oder dem Ätzen.

25. Verwendung der mittelfunktionellen Aminophosphinat-Copolymere gemäß den Ansprüchen 1 bis 12 oder der nach dem Verfahren gemäß den Ansprüchen 13 bis 19 hergestellten mittelfunktionellen Aminophosphinat-Copolymere in festen oder flüssigen Wasch- und Reinigungsmitteln.

## Revendications

1. Copolymère aminophosphinate à fonctionnalité centrale, ou son oligomère, de formule :
(A)ₐ-[PO(OX)CR'₂NR(R''NR)ₘCR'₂-]ₙPO(OX)-(A)_{b} (I)
dans laquelle
X est l'hydrogène ou un cation approprié quelconque ; chacun des groupes R, qui peuvent être identiques ou différents, et chacun des groupes R', qui peuvent être identiques ou différents, est l'hydrogène, un groupe alkyle, cycloalkyle, alcényle, aryle, aralkyle, alkaryle ou alcoxyalkyle éventuellement substitué de 1 à 20 atomes de carbone, chacun pouvant éventuellement être substitué une ou plusieurs fois,
R" est un groupe alcane, un groupe alcane substitué ou un groupe hétérocyclique ;
et A est dérivé d'un monomère approprié quelconque, a et b sont identiques et chacun est un entier de 1 à 1 000 ou a et b sont différents et l'un est zéro ou un entier de 1 à 1 000 et l'autre est un entier de 1 à 1 000,
m est zéro ou de 1 à 100,
et n est zéro ou de 1 à 100.

2. Copolymère selon la revendication 1, dans lequel n est un entier de 1 à 20.

3. Copolymère selon la revendication 2, dans lequel n est un entier de 2 à 6.

4. Copolymère selon l'une quelconque des revendications précédentes, dans lequel a et b peuvent être identiques ou différents et sont chacun des entiers de 1 à 20.

5. Copolymère selon l'une quelconque des revendications précédentes, dans lequel R'' est substitué une ou plusieurs fois avec un groupe acide carboxylique, un groupe acide sulfonique, un groupe acide phosphonique ou un groupe amino.

6. Copolymère selon l'une quelconque des revendications précédentes, dans lequel au moins un des groupes R porte au moins un substituant acide carboxylique.

7. Copolymère selon l'une quelconque des revendications précédentes, dans lequel le monomère, A, est un composé éthyléniquement insaturé quelconque dont la liaison éthylénique est activée chimiquement par au moins un groupe adjacent.

8. Copolymère selon la revendication 7, dans lequel le monomère est choisi parmi l'acide acrylique, l'acide fumarique, l'acide maléique, l'acide vinylsulfonique, l'acide vinylidène diphosphonique, l'acide méthacrylique, l'acide itaconique, l'acide aconitique, l'acide mésaconique, l'acide citraconique, l'acide crotonique, l'acide isocrotonique, l'acide angélique, l'acide tiglique, l'alcool vinylique, le chlorure de vinyle, l'acide vinyle phosphonique, l'acide styrène sulfonique, l'acide styrène-p-sulfonique, l'acide 2-acrylamido-2-méthyle propane sulfonique et leurs dérivés, et les sels solubles dans l'eau desdits acides.

9. Copolymère selon l'une quelconque des revendications 1 à 6, dans lequel le monomère, A, est l'acrylate ou le méthacrylate d'éthyle/méthyle/butyle, l'acétate de vinyle, le styrène, le versatate de vinyle, le stéarate de vinyle, un vinyle silane, un vinyle siloxane, une N-vinylpyrrolidone, l'acrylamide et ses dérivés, l'acrylate/le méthacrylate d'hydroxy éthyle, les esters d'acrylate, l'acrylate de tert-butyle, l'acrylate de 2-éthyle-hexyle ou l'acrylate d'octadécyle et leurs dérivés.

10. Copolymère selon la revendication 1, dans lequel X, R et R' sont l'hydrogène, R" est choisi parmi (CH₂)₂ ou (CH₂)₈ ou (CH₂)₁₂, m est 1 et A est dérivé de l'acide acrylique.

11. Copolymère selon la revendication 1, dans lequel X, R et R' sont l'hydrogène, R" est (CH₂)₄CHCOOH et m est 1 et A est dérivé de l'acide acrylique.

12. Copolymère selon la revendication 1, dans lequel X, R et R' sont l'hydrogène, R'' est CHCH₃CH₂(OCH₂CHCH₃)_{2,6} et m est 1 et A est dérivé de l'acide acrylique.

13. Procédé de préparation d'un copolymère aminophosphinate à fonctionnalité centrale, et ses oligomères, de formule (I), selon l'une quelconque des revendications 1 à 12, comprenant les étapes consistant à
(a) préparer un polymère aminophosphinate de formule (II),
(II) H-[PO(OX)CR'₂NR(R''NR)ₘCR'₂-]ₙPO(OX)H
dans laquelle R, R', R'', X, m et n ont la même signification que dans le premier aspect ci-dessus, en laissant de l'acide hypophosphoreux réagir avec une amine en présence d'un composé de carbonyle et d'un acide inorganique ; et
(b) ajouter ensuite un groupe monomère approprié dérivé du groupe A de la formule (I), ce groupe monomère étant un composé éthyléniquement insaturé dont la liaison activée chimiquement réagit avec le polymère de formule (II) pour donner lesdits groupes A.

14. Procédé selon la revendication 14, dans lequel le rapport molaire acide hypophosphoreux:amine est de 4:1 à 1:1.

15. Procédé selon l'une quelconque des revendications 13 à 14, dans lequel le polymère aminophosphinate de l'étape (a) est synthétisé par la réaction d'une ou de plusieurs amines primaires, d'une ou de plusieurs amines secondaires, d'une ou de plusieurs diamines ou d'un mélange quelconque des amines susmentionnées.

16. Procédé selon la revendication 15, dans lequel l'amine est une diamine.

17. Procédé selon la revendication 16, dans lequel la diamine est choisie parmi l'éthylène diamine, le 1,8-diaminooctane ou le 1,12-diaminododécane.

18. Procédé selon l'une quelconque des revendications 13 à 17, dans lequel les polymères aminophosphinate de l'étape (a) sont synthétisés dans une phase liquide quelconque dans laquelle les réactifs sont au moins modérément solubles.

19. Procédé selon la revendication 18, dans lequel les polymères aminophosphinate de l'étape (a) sont synthétisés dans une solution acide aqueuse à 40-120 °C dans une plage de pH de 0 à 2.

20. Utilisation des copolymères aminophosphinate à fonctionnalité centrale selon les revendications 1 à 12 ou fabriqués par le procédé selon les revendications 13 à 19 en tant qu'agents antitartre et anticorrosion dans des systèmes aqueux pour empêcher le dépôt de carbonate de calcium et de sulfate de baryum.

21. Utilisation des copolymères aminophosphinate à fonctionnalité centrale selon les revendications 1 à 12 ou fabriqués par le procédé selon les revendications 13 à 19 en tant qu'inhibiteurs de SMUT, additifs pour préparations d'hygiène orale et dentifrices, retardateurs de durcissement pour ciment et plâtre, agents antitartre pour dessalement, défloculation, adhésion, prétraitement, dispersant, séquestrants, agents chélateurs, agents anti-mousse, agent anticorrosion, adjuvants, tensioactifs et agents d'étanchéité pour l'anodisation de l'aluminium.

22. Utilisation des copolymères aminophosphinate à fonctionnalité centrale selon les revendications 1 à 12 ou fabriqués par le procédé selon les revendications 13 à 19 en tant que défloculants ou dispersants pour substances inorganiques particulaires (telles que les argiles et, le carbonate de calcium) et pour d'autres pigments, pour le ciment et pour les salissures en détergence.

23. Utilisation des copolymères aminophosphinate à fonctionnalité centrale selon les revendications 1 à 12 ou fabriqués par le procédé selon les revendications 13 à 19 dans des pigments anticorrosion.

24. Utilisation des copolymères aminophosphinate à fonctionnalité centrale selon les revendications 1 à 12 ou fabriqués par le procédé selon les revendications 13 à 19 pour fournir un traitement anticorrosion pour surfaces métalliques après un usinage quelconque et avant un stockage, un revêtement, un dépôt électrolytique, un polissage ou une gravure.

25. Utilisation des copolymères aminophosphinate à fonctionnalité centrale selon les revendications 1 à 12 ou fabriqués par le procédé selon les revendications 13 à 19 dans des compositions détergentes solides ou liquides.
